# EUROPÄISCHE PATENTSCHRIFT

(11) **EP 0 931 167 B1**
(45) Veröffentlichungstag und Bekanntmachung des Hinweises auf die Patenterteilung: **03.05.2000**
(21) Anmeldenummer: 97912116.7
(22) Anmeldetag: 06.10.1997
(51) Int. Cl.: C21B 13/14, C21B 13/00

(54) **VORRICHTUNG ZUM DOSIERTEN EINBRINGEN VON FEINTEILCHENFÖRMIGEM MATERIAL IN EIN REAKTORGEFÄSS**
DEVICE FOR DOSED INTRODUCTION OF FINE PARTICLE MATERIAL INTO A REACTOR VESSEL
DISPOSITIF POUR L'INTRODUCTION DOSEE D'UN MATERIAU EN FINES PARTICULES DANS UN REACTEUR

(30) Priorität: 08.10.1996 AT 177896
(43) Veröffentlichungstag der Anmeldung: 28.07.1999
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, Pohang City, Kyong Sang Book-Do 790-330 (KR)
(72) Erfinder: GENNARI, Udo, A-4020 Linz (AT); KEPPLINGER, Leopold, Werner, A-4060 Leonding (AT); WALLNER, Felix, A-4020 Linz (AT)
(74) Vertreter: Rieberer, Stefan, Dipl.-Ing.
(86) Internationale Anmeldenummer: EP9705467
(87) Internationale Veröffentlichungsnummer: WO9815663

(56) Entgegenhaltungen:
- EP-A- 0 063 924
- WO-A-90/07010
- DE-A- 2 805 816
- PATENT ABSTRACTS OF JAPAN vol. 008, no. 052 (C-213), 9.März 1984 & JP 58 210110 A (KAWASAKI SEITETSU KK), 7.Dezember 1983,

## Beschreibung

Die Erfindung betrifft eine Vorrichtung zum dosierten Einbringen von feinteilchenformigem Material in ein Raktorgefäß mit einer Wirbelschichtschleuse, in die eine Materialzuführungsvorrichtung von oben einmündet und die in ihrem unteren Endbereich eine ein Fluidisierungsgas einbringende Gasleitung mündet und die ein Überlaufrohr zur Weiterleitung des feinteilchenförmigen Materials aufweist, sowie eine Anlage mit einer Vorrichtung dieser Art und ein Verfahren zum Betrieb dieser Vorrichtung.

Eine Vorrichtung der eingangs beschriebenen Art ist aus der US-A-4,277,205 bekannt. Bei dieser Vorrichtung führt vom Zentralrohr eine Vielzahl von Überlaufrohren zu über den Querschnitt des Reaktorgefäßes verteilten Aufgabestellen. Das Zentralrohr ist mitsamt den Überlaufrohren drehbar innerhalb des Reaktorgefäßes angeordnet, wodurch eine gleichmäßige Verteilung des feinteilchenförmigen Materials im Reaktorgefäß sichergestellt werden soll. Die Anordnung innerhalb des Reaktorgefäßes ist erforderlich, um die Überlaufrohre drehen zu können, bedingt jedoch hohe Verschleißerscheinungen des Drehmechanismus und der Dichtungen, insbesondere wenn das Reaktorgefäß für Reaktionen, die bei höheren Temperaturen stattfinden, eingesetzt werden und starke Gasströmungen auftreten.

Ein Nachteil der bekannten Einrichtung ist darin zu sehen, daß das feinteilchenförmige Material stets nur gleichmäßig verteilt über den Querschnitt in das Reaktorgefäß eingebracht werden kann. Eine gezielte Einbringung des feinteilchenförmigen Materials zu bestimmten Aufgabepunkten bzw. Bereichen ist mit dieser Vorrichtung nicht möglich.

Die Erfindung bezweckt die Vermeidung dieser Nachteile und Schwierigkeiten und stellt sich die Aufgabe, eine Vorrichtung der eingangs beschriebenen Art sowie ein Verfahren zum Betrieb dieser Vorrichtung zu schaffen, welche ein dosiertes Einbringen des feinteilchenförmigen Materials in das Reaktorgefäß gestatten. Insbesondere soll es möglich sein, örtlich gezielt und zeitabhängig das feinteilchenförmige Material in verschiedene Bereiche des Reaktorgefäßes einzubringen, wobei jedoch die Vorrichtung starr und unbeweglich ausgebildet werden kann, um Verschleißprobleme zu vermeiden und die Investitions- und Instandhaltungskosten niedrig zu halten.

Es ist ein weiteres Ziel der Erfindung, bei einer Anlage zum Herstellen von Metallschmelzen, insbesondere Roheisen, aus von Erz, insbesondere Eisenerz und Zuschlägen gebildeten, zumindest teilweise einen Feinanteil aufweisenden Einsatzstoffen eine Vorrichtung zum Einbringen des feinteilchenförmigen Reduktionsproduktes zu schaffen, wobei das Reduktionsprodukt gut durchgasbare Zonen bildet, die in dreidimensionaler Weise jedoch miteinander verbunden sind, so daß eine gute Zugänglichkeit für das Reduktionsgas gegeben ist.

Diese Aufgabe wird erfindungsgemäß bei einer Vorrichtung der eingangs beschriebenen Art dadurch gelöst, daß eine Mehrzahl von- jeweils unabhängig voneinander zu- und abschaltbaren - Wirbelschichtschleusen außerhalb des Reaktorgefäßes vorgesehen ist, deren Überlaufrohre in das Innere des Reaktorgefäßes ragen.

Eine bevorzugte Ausführungsform ist dadurch gekennzeichnet, daß die Vorrichtung ein eine Wirbelschichtschleuse bildendes Zentralrohr aufweist und daß vom Zentralrohr mindestens zwei jeweils in eine weitere Wirbelschichtschleuse mündende Überlaufrohre ausgehen, wobei jede weitere Wirbelschichtschleuse von einem Behälter gebildet ist, in den in seinem unteren Bereich eine ein Fluidisierungsgas zuleitende Gasleitung mündet und von dem mindestens ein Überlaufrohr ausgeht, welches in das Reaktorgefäß mündet, und wobei die Fluidisierungsgasleitungen jeweils mit Ventilen zum örtlich dosierten Einbringen des feinteilchenförmigen Materials ausgestattet sind.

Mit Hilfe der Ventile gelingt es, die weiteren Wirbelschichtschleusen, die das Zentralrohr umgeben, einzeln oder zu mehreren zu aktivieren oder deaktivieren. Das feinteilchenförmige Material sammelt sich zunächst im Zentralrohr und füllt, wenn das Zentralrohr mit einem Fluidisierungsgas beschickt wird, auch die weiteren Wirbelschichtschleusen an. Je nachdem, ob ein Fluidisierungsgas einer der weiteren Wirbelschichtschleusen zugeführt wird, wird dies Wirbelschichtschleuse durchgängig, und es kann das feinteilchenförmige Material aus dieser Wirbelschichtschleuse über das Überlaufrohr in das Reaktorgefäß eintreten. Durch abwechselndes Zuschalten des Fluidisierungsgases läßt sich der Materialstrom und damit auch der Aufgabepunkt bzw. Aufgabebereich im Reaktorgefäß variieren. Über die Gasmenge läßt sich auch eine Dosierung des feinteilchenförmigen Materials erreichen, so daß die Ventile zweckmäßig als Mengenregelventile ausgebildet sind.

Es hat sich gezeigt, daß ein dosiertes Einbringen zweckmäßig mit mindestens zwei, jedoch maximal acht Wirbelschichtschleusen, durchgeführt wird. Vorzugsweise mittels drei oder vier Wirbelschichtschleusen.

Um ein Auffächern des feinteilchenförmigen Materials, das durch ein Überlaufrohr in Form einer Strähne in das Reaktorgefäß eintritt, zu verhindern, sind vorteilhaft die in das Reaktorgefäß mündenden Enden der Überlaufrohre mit einer Gaszuführeinrichtung für die Bildung eines am unteren Ende des Überlaufrohres entstehenden Gasmantels versehen, wobei zweckmäßig das Überlaufrohr unter Ausbildung eines Ringspalthohlraumes einen Doppelmantel aufweist und die Gaszuführungseinrichtung in den Ringspalthohlraum mündet.

Vorzugsweise ist zur Bildung eines Gasmantels das untere Ende des Überlaufrohres mit einer Ringspaltöffnung oder mehreren Öffnungen für den Austritt eines durch den Ringspalthohlraum strömenden Gases versehen.

Um den gesamten Querschnitt des Reaktorgefäßes mit dem feinteilchenförmigen Material beaufschlagen zu können, sind zweckrnäßig die Wirbelschichtschleusen im Abstand vom Zentralrohr und vorzugsweise in radialsymmetrischer Anordnung vorgesehen.

Eine Anlage zum Herstellen von Metallschmelzen, insbesondere Roheisen, aus von Erz, insbesondere Eisenerz und Zuschlägen gebildeten, zumindest teilweise einen Feinanteil aufweisenden Einsatzstoffen, ist gekennzeichnet durch mindestens zwei hintereinander in Serie geschaltete Wirbelschichtreaktoren, wobei das Erz von Wirbelschichtreaktor zu Wirbelschichtreaktor über Förderleitungen in einer Richtung und das Reduktionsgas von Wirbelschichtreaktor zu Wirbelschichtreaktor über Reduktionsgas-Verbindungsleitungen in die entgegengesetzte Richtung geführt ist, und durch einen Einschmelzvergaser, in den eine das Reduktionsprodukt aus dem in Fließrichtung des Erzes letztangeordneten Wirbelschichtreaktor führende Zuleitung über eine Vorrichtung zum dosierten Einbringen des feinteilchenförmigen Reduktionsproduktes münden, sowie eine Kohlenstoff und eine andere, Sauerstoff zubringende Leitung, wobei vom Einschmelzvergaser eine Reduktionsgas-Förderleitung ausgeht und in den in Fließrichtung des Erzes letztangeordneten Wirbelschichtreaktor mündet.

Vorteilhaft gehen die Gasleitungen zur Zuführung des Fluidisierungsgases von einer Reduktionsgas-Förderleitung aus.

Um ein gut durchgasbares Bett aus dem feinteilchenförmigen Material im Reaktorgefäß zu bilden, werden vorzugsweise die neben dem Zentralrohr angeordneten Wirbelschichtschleusen abwechselnd aktiviert.

Gemäß einer bevorzugten Ausführungsform erfolgt die Aktivierung der Wirbelschichtschleusen aufgrund von Prozeßmeßwerten eines im Reaktorgefäß stattfindenden Prozesses, mit deren Hilfe die Position eines Aufgabepunktes bzw. Aufgabebereiches für feinteilchenförmiges Material im Reaktorgefäß bestimmt wird, worauf durch gezielte Ab- und Anschaltung der Wirbelschichtschleusen eine Verteilung des feinteilchenförmigen Materials vorgenommen wird.

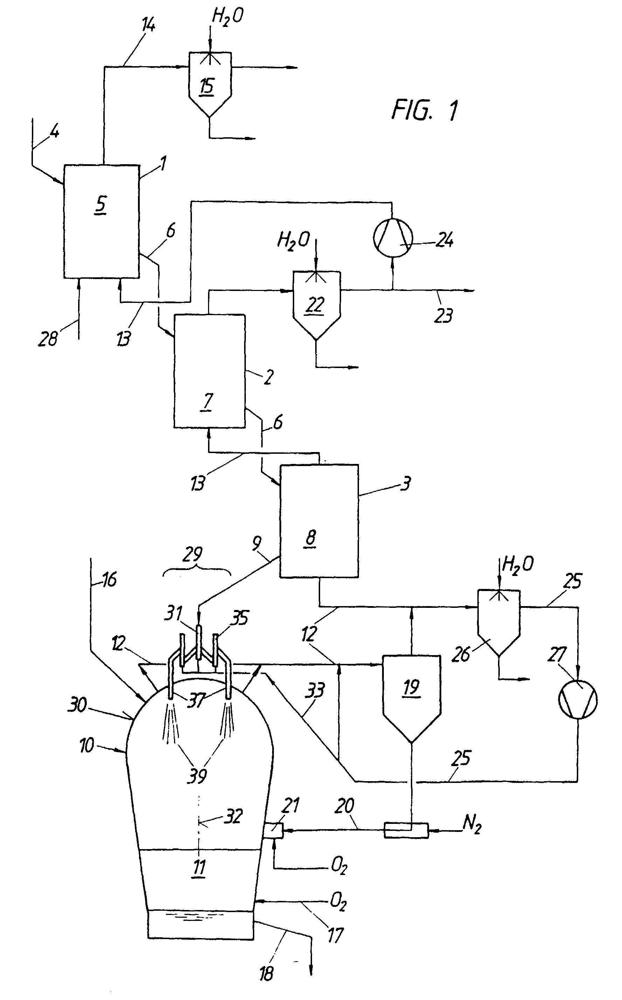

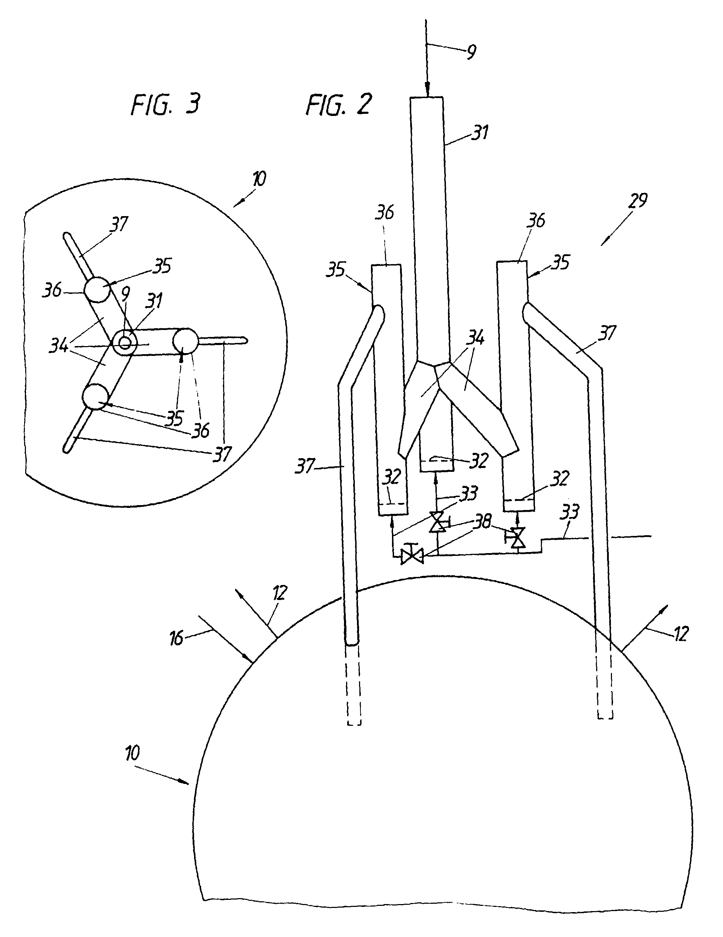

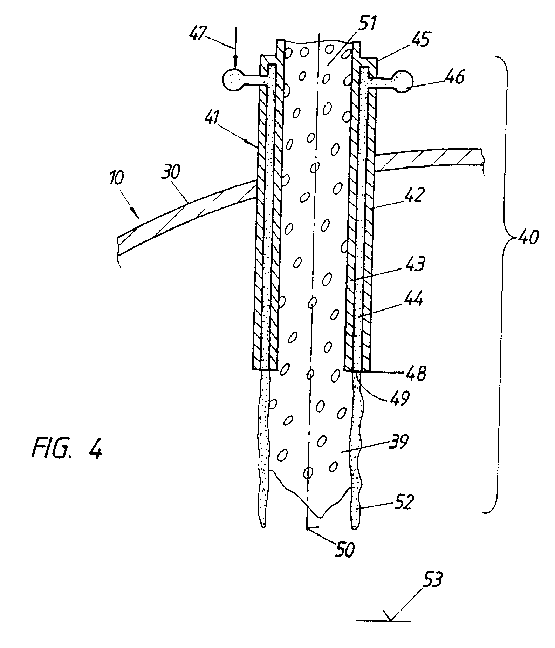

Die Erfindung ist nachfolgend anhand in der Zeichnung dargestellter Ausführungsbeispiele näher erläutert, wobei Fig. 1 beispielhaft eine Gesamtanlage zum Herstellen von Metallschmelzen in schematischer Darstellung zeigt, bei der die erfindungsgemäße Vorrichtung mit Vorteil zur Anwendung gelangt. Fig. 2 veranschaulicht ein Detail der Fig. 1 im vergrößerten Maßstab. Fig. 3 gibt eine Grundrißdarstellung der Fig. 2 wieder. Fig. 4 zeigt ein Detail eines Endes eines Überlaufrohres im vergrößerten Maßstab nach einer Ausführungsvariante.

Die Anlage nach Fig. 1 weist drei in Serie hintereinander geschaltete Wirbelschichtreaktoren 1 bis 3 auf, wobei ein feinteilchenförmiges eisenoxidhältiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End- bzw. Fertig-Reduktion des Feinerzes zu Eisenschwamm.

Das reduzierte feinteilchenförmige Reduktionsmaterial, also der Eisenschwamm, wird über eine Förderleitung 9 in einen Einschmelzvergaser 10 geleitet, u.zw. in einer bestimmten Art und Weise, wie sie später noch beschrieben wird. Im Einschmelzvergaser 10 wird in einer von einem Fließbett gebildeten Einschmelzvergasungszone 11 aus Kohlenstoffträgern, wie Kohle, und sauerstoffhältigem Gas ein CO- und H₂-hältiges Reduktionsgas erzeugt, das über eine Gasableitung 12, die als Reduktionsgas-Förderleitung 12 für den in Fließrichtung des Feinerzes letztangeordneten Wirbelschichtreaktor 3 dient, in diesen Wirbelschichtreaktor 3 eingeleitet wird. Das Reduktionsgas wird über mehrere radialsymmetrisch angeordnete Gasaustrittsstutzen aus dem Einschmelzvergaser 10 abgeleitet.

Das Reduktionsgas wird im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine Topgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Förderleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20 mit Stickstoff als Fördermittel und über einen Brenner 21 unter Einblasen von Sauerstoff zugeführt werden.

Eine Möglichkeit zur Einstellung der Reduktionsgastemperatur ergibt sich durch die vorzugsweise vorgesehene Gasrückführleitung 25, die von der Reduktionsgas-Förderleitung 12 ausgeht und einen Teil des Reduktionsgases über einen Wäscher 26 und einen Verdichter 27 in diese Reduktionsgas-Förderleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 28 zugeführt werden, wodurch eine Teilverbrennung des der Vorerwärmungsstufe 5 zugeführten umgesetzten Reduktionsgases stattfindet.

Erfindungsgemäß erfolgt die Chargierung des feinteilchenförmigen Eisenschwammes über eine Chargier-Vorrichtung 29, die am den Einschmelzvergaser 10 nach oben hin abschließenden Dom 30 angeordnet ist und in Fig. 2 vergrößert dargestellt ist.

Die Chargier-Vorrichtung 29 ist von einem eine Wirbelschichtschleuse darstellenden Zentralrohr 31 gebildet, in das von oben die Förderleitung 9 einmündet. Der untere Bereich des Zentralrohres 31 weist zur Bildung einer Wirbelschichtschleuse einen gasdurchlässigen Boden 32 auf, dem über eine ein Fluidisierungsgas zuführende Gasleitung 33 Fluidisierungsgas zugeführt wird. Die Gasleitung 33 ist eine Zweigleitung der Gasrückführleitung 25.

Von dem Zentralrohr 31 gehen in einem Abstand über dem gasdurchlässigen Boden Überlaufrohre 34 aus, u.zw. gemäß dem dargestellten Ausführungsbeispiel drei an der Zahl, die radialsymmetrisch von dem zentral über dem Einschmelzvergaser 10 angeordneten Zentralrohr 31 schräg nach unten gerichtet sind. Diese Überlaufrohre 34 münden in weitere Wirbelschichtschleusen 35, die jeweils von einem Behälter 36 gebildet sind, die jeweils, ebenso wie das Zentralrohr, im unteren Bereich mit einem gasdurchlässigen Boden 32 mit einer Einmündung einer ein Fluidisierungsgas zu bringenden Gasleitung 33 sowie einem im oberen Bereich ausgehenden Überlaufleitung 37 ausgestattet sind. Die Überlaufleitungen sind wiederum radial nach auswärts gerichtet angeordnet und ragen durch den Dom 30 des Einschmelzvergasers 10 in dessen Inneres.

Sämtliche Gasleitungen 33, die in eine der Wirbelschichtschleusen 31, 35 münden, sind mit Ventilen 38 ausgestattet, so daß durch Aktivierung und Deaktivierung jeder der Wirbelschichtschleusen 31, 35 eine Durchlässigkeit und eine Förderung bzw. ein Stillstand der Förderung des feinteilchenförmigen Reduktionsmaterials erfolgen kann, u.zw. ohne daß eine mechanische Betätigung von Teilen, die mit dem feinteilchenförmigen heißen Reduktionsmaterial in Kontakt gelangen, erforderlich ist. Es kann durch abwechselnde Aktivierung verschiedener der weiteren Wirbelschichtschleusen 35 und damit Förderung über verschiedene Überlaufrohre 37 ein konzentrierterer Materialstrom erzielt werden, als wenn ständig über sämtliche Überlaufrohre Material gefördert wird. Hierdurch kann der Austrag von feinteilchenförmigem Material aus dem Einschmelzvergaser 10 mit dem aus dem Einschmelzvergaser 10 austretenden Reduktionsgas 12 minimiert werden, denn die Strähnen 39, die durch die Überlaufrohre 37 in den Einschmelzvergaser 10 eintreten, sind dichter und kompakter.

Die abwechselnde Aktivierung und Deaktivierung der Überlaufrohre 37 kann auch dazu benutzt werden, auftretenden Ungleichverteilungen der Umfangstemperatur im Einschmelzvergaser 10 bzw. der Gasmengen durch Gasaustrittsöffnungen entgegenzuwirken. In diesem Fall werden Prozeßmeßwerte dazu benutzt, ein bestimmtes der Überlaufrohre 37 über einen Prozeßrechner gezielt zu aktivieren oder deaktivieren, so daß eine bessere Gleichverteilung erreichbar ist.

Das zeitweilige Aktivieren und Deaktivieren der Überlaufrohre 37 kann auch dazu dienen, im Einschmelzvergaser 10 Linsen aus teilchenförmigem Direktreduktionsmaterial zu bilden, die allseitig von entgasten Kohleteilchen (Charteilchen) und somit von optimal durchgasbaren Zonen umgeben sind. Das Reduktionsgas kann von allen Seiten gut in die vom feinteilchenförmigen Direktreduktionsmaterial gebildeten Linsen eindiffundieren. Zudem erlaubt die Verwendung der Wirbelschichtschleusen 31, 35 gegen einen höheren Druck im Einschmelzvergaser 10 zu chargieren, da die Druckdifferenz zwischen den Wirbelschichtreaktoren 31, 35 und dem Einschmelzvergaser 10 in den Wirbelschichtschleusen 31, 35 abgebaut werden kann. Über eine Regelung der Gasmenge des Fluidisierungsgases läßt sich auch in bequemer Weise eine Dosierung des in den Einschmelzvergaser einzubringenden Materials erreichen.

Gemäß einer in Fig. 4 dargestellten Variante sind die ins Innere des Einschmelzvergasers 10 ragenden Endbereiche 40 der Überlaufrohre 37 als Doppelmantelrohre 41 ausgebildet. Zwischen dem Außenmantel 42 und dem Innenmantel 43 des Doppelmantelrohrs 41 ist ein ringspaltförmiger Hohlraum 44 gebildet, der mit seinem außerhalb des Einschmelzvergasers 10 liegenden Ende 45 an eine Ringeinspeisleitung 46 für ein Kühlgas angeschlossen ist. Als Kühlgas wird ein von der Gasrückführleitung 25 über eine Zweigleitung 47 mit vorzugsweise einem weiteren nicht näher dargestellten Verdichter abgezweigtes gekühltes Reduktionsgas verwendet. Am ins Innere des Einschmelzvergasers 10 ragenden Ende 48 des Doppelmantelrohrs 41 ist entweder eine Ringspaltöffnung 49 vorgesehen oder es sind mehrere benachbarte Bohrungen mit etwa parallel zur Längsmittelachse 50 des Doppelmantelrohrs 41 vorgesehenen Mittelachsen angeordnet, durch die das Kühlgas in das Innere des Einschmelzvergasers 10 strömt.

Durch den zentralen Innenraum 51 des Doppelmantelrohres 41 fließt der Eisenschwamm, der am unteren Ende 48 des Doppelmantelrohres 41 eine frei weiterfallende Strähne 39 bildet. Das untere Ende 48 des Doppelmantelrohres 41 befindet sich im vertikalen Abstand vom Dom 30 an einer Stelle, an der das Reduktionsgas noch nicht seine maximale Strömungsgeschwindigkeit aufweist. Diese Strähne 39 wird durch das ebenfalls am unteren Ende 48 des Doppelmantelrohres 41 ausströmende Kühlgas, das hier einen Gasmantel 52 bildet, umschlossen und am Aufweiten gehindert. Dieser Gasmantel 52 bildet somit über zumindest einen Teil der freien Fallhöhe des Eisenschwamms - so wie das Doppelmantelrohr 41 - einen Schutzmantel, sodaß die Feinteilchen des Eisenschwamms durch das mit relativ hoher Geschwindigkeit nach oben strömende Reduktionsgas nicht mitgerissen werden. In dem Höhenniveau 53, in dem die Strähne 39 sich infolge des Nachlassens der Stützwirkung des Gasmantels aufweitet, ist die Geschwindigkeit des Reduktionsgases wesentlich geringer, sodaß die Feinteilchen am Fallen bzw. Absinken in das Fließbett der Einschmelzvergasungszone 11 nicht gehindert werden.

Die Geschwindigkeit des Kühlgases ist an der Austrittsstelle aus dem Doppelmantelrohr 41, d.h. dessen unterem Ende 4X, mindestens 10 mal, vorzugsweise 50 bis 100 mal höher als die maximale Geschwindigkeit des Reduktionsgases. Hierdurch kann der Gasmantel relativ dünnwandig gehalten werden, sodaß die Menge des in den Einschmelzvergaser 10 rückgeführten Reduktionsases relativ gering ist.

Die Durchströmung des Hohlraumes 44 des Doppelmantelrohrs 41 mit Kühlgas mit anschließendem Austritt des Kühlgases an vier unteren Öffnung 49 des Doppelmantelrohrs 41 bringt eine der mechanischen Belastung des Doppelmantelrohrs 41 angepaßte Kühlwirkung mit sich.

Die Kühlwirkung des Kühlgases ist dort am größten, wo die mechanische Belastung des Doppelmantelrohrs 41 durch sein Eigengewicht am größten ist, nämlich im Bereich des Durchtritts des Doppelmantelrohrs 41 durch den Dom 30 des Einschmelzvergasers 10. Es kommt dann während des Weiterströmens des Kühlgases durch den Hohlraum 44 des Doppelmantelrohrs 41 zu einer Erwärmung des Kühlgases, was zur Folge hat, daß sich die Geschwindigkeit des Kühlgases erhöht. Hierdurch kommt man mit relativ kurzen Doppelmantelrohren 41 aus, deren mechanische und thermische Belastung dementsprechend geringer ist als bei sehr langen, bis knapp oberhalb des Fließbettes ragenden Fallrohren. Die Standfestigkeit der erfindungsgemäßen Konstruktion ist hierdurch sehr hoch.

Durch die Kühlwirkung erübrigt sich der Einsatz sehr teurer Sonderwerkstoffe auf der Basis von Spezialkeramik oder Superlegierungen auf Fe-Basis. Es genügt vielmehr, das Doppelmantelrohr 41 aus hochwarmfestem Stahl zu fertigen.

## Patentansprüche

1. Vorrichtung (29) zum dosierten Einbringen von feinteilchenförmigem Material in ein Reaktorgefäß (10) mit einer Wirbelschichtschleuse (31), in die eine Materialzuführungsvorrichtung (9) von oben einmündet und in die in ihrem unteren Endbereich eine ein Fluidisierungsgas einbringende Gasleitung (33) mündet und die ein Überlaufrohr (34) zur Weiterleitung des feinteilchenförmigen Materials aufweist, dadurch gekennzeichnet, daß eine Mehrzahl von- jeweils unabhängig voneinander zu- und abschaltbaren - Wirbelschichtschleusen (35) außerhalb des Reaktorgefäßes (10) vorgesehen sind, deren Überlaufrohre (37) in das Innere des Reaktorgefäßes (10) ragen.

2. Vorrichtung nach Anspruch 1, dadurch gekennzeichnet, daß die Vorrichtung (29) ein eine Wirbelschichtschleuse (31) bildendes Zentralrohr (31) aufweist und daß vom Zentralrohr (31) mindestens zwei jeweils in eine weitere Wirbelschichtschleuse (35) mündende Überlaufrohre (34) ausgehen, wobei jede weitere Wirbelschichtschleuse (35) von einem Behälter (36) gebildet ist, in den in seinem unteren Bereich eine ein Fluidisierungsgas zuleitende Gasleitung (33) mündet und von dem mindestens ein Überlaufrohr (37) ausgeht, welches in das Reaktorgefäß mündet, und wobei die Fluidisierungsgasleitungen (37) jeweils mit Ventilen (38) zum örtlich dosierten Einbringen des feinteilchenförmigen Materials ausgestattet ist.

3. Vorrichtung nach Anspruch 2, dadurch gekennzeichnet, daß mindestens zwei, jedoch maximal acht Wirbelschichtschleusen (35) vorgesehen sind, vorzugsweise drei oder vier Wirbelschichtschleusen (35).

4. Vorrichtung nach einem oder mehreren der Ansprüche 1 bis 3, dadurch gekennzeichnet, daß die in das Reaktorgefäß (10) mündenden Enden der Überlaufrohre mit einer Gaszuführungseinrichtung (46,47) für die Bildung eines am unteren Ende (48) des Überlaufrohres entstehenden Gasmantels (52) versehen sind (Fig. 4).

5. Vorrichtung nach Anspruch 4, dadurch gekennzeichnet, daß das Überlaufrohr (37) unter Ausbildung eines Ringspalthohlraumes (44) einen Doppelmantel (42,43) aufweist und die Gaszuführungseinrichtung (46,47) in den Ringspalthohlraum (44) mündet.

6. Vorrichtung nach Anspruch 5, dadurch gekennzeichnet, daß das untere Ende (48) des Überlaufrohres mit einer Ringspaltöffnung (49) oder mehreren Öffnungen für den Austritt eines durch den Ringspalthohlraum strömenden Gases versehen ist.

7. Vorrichtung nach einem oder mehreren der Ansprüche 1 bis 5, dadurch gekennzeichnet daß die Wirbelschichtschleusen (35) im Abstand vom Zentralrohr (31) und vorzugsweise in radialsymmetrischer Anordnung vorgesehen sind.

8. Anlage zum Herstellen von Metallschmelzen, insbesondere Roheisen, aus von Erz, insbesondere Eisenerz, und Zuschlägen gebildeten, zumindest teilweise einen Feinanteil aufweisenden Einsatzstoffen, gekennzeichnet durch mindestens zwei hintereinander in Serie geschaltete Wirbelschichtreaktoren (1,2, 3), wobei das Erz von Wirbelschichtreaktor (1) zu Wirbelschichtreaktor (2. 3) über Förderleitungen (6) in einer Richtung und das Reduktionsgas von Wirbelschichtreaktor (3) zu Wirbelschichtreaktor (2, 1) über Reduktionsgas-Verbindungsleitungen (13) in die entgegengesetzte Richtung geführt ist, und durch einen Einschmelzvergaser (10), in den eine das Reduktionsprodukt aus dem in Fließrichtung des Erzes letztangeordneten Wirbelschichtreaktor (3) führende Zuleitung (9) über eine Vorrichtung (29) zum dosierten Einbringen des feinteilchenförmigen Reduktionsproduktes nach einem oder mehreren der Ansprüche 1 bis 7 mündet, sowie eine Kohlenstoff und eine Sauerstoff zubringende Leitung (16, 17), wobei vom Einschmelzvergaser (10) eine Reduktionsgas-Förderleitung (12) ausgeht und in den in Fließrichtung des Erzes letztangeordneten Wirbelschichtreaktor (3) mündet.

9. Anlage nach Anspruch 8, dadurch gekennzeichnet, daß die Gasleitungen (33) zur Zuführung des Fluidisierungsgases von einer Reduktionsgas-Förderleitung (12) ausgehen.

10. Verfahren zum Betrieb einer Vorrichtung nach einem oder mehreren der Ansprüche 1 bis 7, dadurch gekennzeichnet, daß die neben dem Zentralrohr (31) angeordneten Wirbelschichtschleusen (35) abwechselnd aktiviert werden.

11. Verfahren nach Anspruch 10, dadurch gekennzeichnet, daß die Aktivierung der Wirbelschichtschleusen (35) aufgrund von Prozeßmeßwerten eines im Reaktorgefäß (10) stattfindenden Prozesses erfolgt, mit deren Hilfe die Position eines Aufgabepunktes bzw. Aufgabebereiches für feinteilchenförmiges Material im Reaktorgefäß (10) bestimmt wird, worauf durch gezielte Ab- und Anschaltung der Wirbelschichtschleusen (35) eine Verteilung des feinteilchenförmigen Materials vorgenommen wird.

## Claims

1. Apparatus (29) for the metered introduction of finely particulate material into a reactor vessel (10) with a fluidized-bed lock (31), into which a material-feed apparatus (9) opens from above and into which, in its lower end region, a gas line (33) introducing a fluidizing gas opens, and which has an overflow pipe (34) for guiding the finely particulate material onwards, characterized in that a plurality of fluidized-bed locks (35) - which can each be switched on and off independently of one another - are provided outside the reactor vessel (10), the overflow pipes (37) from which locks project into the interior of the reactor vessel (10).

2. Apparatus according to Claim 1, characterized in that the apparatus (29) has a central pipe (31), which forms a fluidized-bed lock (31), and in that at least two overflow pipes (34), which each open into a further fluidized-bed lock (35), run from the central pipe (31), each further fluidized-bed lock (35) being formed by a container (36), into which, in its lower region, a gas line (33) supplying a fluidizing gas opens and from which at least one overflow pipe (37) runs, which overflow pipe opens into the reactor vessel, and the fluidizing-gas lines (37) each being equipped with valves (38) for the locally metered introduction of the finely particulate material.

3. Apparatus according to Claim 2, characterized in that at least two, but at most eight fluidized-bed locks (35), preferably three or four fluidized-bed locks (35), are provided.

4. Apparatus according to one or more of Claims 1 to 3, characterized in that those ends of the overflow pipes which open into the reactor vessel (10) are provided with a gas-supply device (46, 47) for forming a gas shroud (52) which forms at the lower end (48) of the overflow pipe.

5. Apparatus according to Claim 4, characterized in that the overflow pipe (37) has a double casing (42, 43), so as to form an annular-gap cavity (44), and the gas-supply device (46, 47) opens into the annular-gap cavity (44).

6. Apparatus according to Claim 5, characterized in that the bottom end (48) of the overflow pipe is provided with an annular-gap opening (49) or a plurality of openings providing an outlet for a gas which flows through the annular-gap cavity.

7. Apparatus according to one or more of Claims 1 to 5, characterized in that the fluidized-bed locks (35) are provided at a distance from the central pipe (31), and preferably in a radially symmetrical arrangement.

8. Plant for producing molten metal, in particular pig iron, from charge materials which are formed from ore, in particular iron ore, and additions and at least in part have a fine fraction, characterized by at least two fluidized-bed reactors (1, 2, 3) which are connected in series one behind the other, the ore from fluidized-bed reactor (1) being guided to fluidized-bed reactor (2, 3) via conveying lines (6) in one direction, and the reducing gas being guided from fluidized-bed reactor (3) to fluidized-bed reactor (2, 1) via reducing-gas connection lines (13) in the opposite direction, and by a melter gasifier (10), into which a feed line (9), which guides the reduction product out of the last fluidized-bed reactor (3), as seen in the direction of flow of the ore, opens via an apparatus (29) for the metered introduction of the finely particulate reduction product according to one or more of Claims 1 to 7, and a line (16) which adds carbon and a line (17) which adds oxygen, a reducing-gas conveying line (12) running from the melter gasifer (10) and opening into the last fluidized-bed reactor (3), as seen in the direction of flow of the ore.

9. Plant according to Claim 8, characterized in that the gas lines (33) for supplying the fluidizing gas run from a reducing-gas conveying line (12).

10. Process for operating an apparatus according to one or more of Claims 1 to 7, characterized in that the fluidized-bed locks (35) which are arranged next to the central pipe (31) are activated alternately.

11. Process according to Claim 10, characterized in that the activation of the fluidized-bed locks (35) is carried out on the basis of measured values from a process which is taking place in the reactor vessel (10), with the aid of which the position of a feed point or feed area for finely particulate material in the reactor vessel (10) is determined, and then the finely particulate material is distributed by switching the fluidized-bed locks (35) on and off in a controlled manner.

## Revendications

1. Dispositif (29) d'introduction dosée d'un matériau se présentant sous forme de fines particules dans un récipient de réacteur (10) avec un sas à lit fluidisé (31), dans lequel un dispositif d'amenée de matériau (9) débouche par le haut et dans lequel, dans sa zone d'extrémité inférieure, débouche une conduite à gaz (33) introduisant un gaz de fluidisation, et qui présente un tube de déversement (34) pour la continuation du transport du matériau se présentant sous la forme de fines particules, caractérisé en ce qu'une pluralité de sas à lit fluidisé (35) - pouvant être raccordés et débranchés chaque fois, indépendamment les uns des autres - sont prévus à l'extérieur du récipient de réacteur (10), sas dont les tubes de déversement (37) pénètrent à l'intérieur du récipient de réacteur (10).

2. Dispositif selon la revendication 1, caractérisé en ce que le dispositif (29) présente un tube central (31), constituant un sas à lit fluidisé (31), et en ce que du tube central (31) partent au moins deux tubes de déversement (34) débouchant chacun dans un autre sas à lit fluidisé (35), chaque autre sas à lit fluidisé (35) étant constitué par un récipient (36) dans lequel débouche dans sa zone inférieure une conduite à gaz (33) amenant un gaz de fluidisation et d'où part au moins un tube de déversement (37) qui débouche dans le récipient de réacteur, et les conduites de fluidisation (37) étant chacune équipées de soupapes (38) pour introduire localement, de façon dosée, du matériau se présentant sous forme de fines particules.

3. Dispositif selon la revendication 2, caractérisé en ce qu'au moins deux, cependant au maximum huit sas à lit fluidisé (35) sont prévus, de préférence trois ou quatre sas à lit fluidisé (35).

4. Dispositif selon l'une ou plusieurs des revendications 1 à 3, caractérisé en ce que les extrémités, débouchant dans le récipient de réacteur (10), des tubes de déversement sont dotées d'un dispositif d'amenée de gaz (46, 47) pour former une enveloppe de gaz (52) constituée à l'extrémité inférieure (48) du tube de déversement (figure 4).

5. Dispositif selon la revendication 4, caractérisé en ce que le tube de déversement (37) présente une enveloppe double (42, 43), en constituant un espace creux d'interstice annulaire (44), et le dispositif d'amenée de gaz (46, 47) débouche dans l'espace creux d'interstice annulaire (44).

6. Dispositif selon la revendication 5, caractérisé en ce que l'extrémité inférieure (48) du tube de déversement est dotée d'une ouverture ou de plusieurs ouvertures d'interstice annulaire (49), pour la sortie d'un gaz s'écoulant à travers l'espace creux d'interstice annulaire.

7. Dispositif selon l'une ou plusieurs des revendications 1 à 5, caractérisé en ce que les sas à lit fluidisé (35) sont prévus à distance du tube central (31) et, de préférence, selon un agencement répondant à une symétrie radiale.

8. Installation de fabrication de masses fondues métalliques, en particulier de fer brut, à partir de produits de traitement constitués de minerai, en particulier de minerai de fer et d'additifs, présentant au moins partiellement une proportion de fines, caractérisé par au moins deux réacteurs à lit fluidisé (1, 2, 3) branchés les uns derrière les autres en série, le minerai étant guidé du réacteur à lit fluidisé (1) vers le réacteur à lit fluidisé (2, 3) par des conduites de transport (6) dans une direction, et le gaz de réaction étant conduit du réacteur à lit fluidisé (3) au réacteur à lit fluidisé (2, 1) par des conduites de liaison de gaz de réduction (13) dans le sens opposé, et au moyen d'un gazéificateur de fusion (10), dans lequel débouche une conduite d'amenée (9) guidant le produit de réduction issu du réacteur à lit fluidisé (3) disposé le dernier dans le sens d'écoulement du minerai, par l'intermédiaire d'un dispositif (29) pour effectuer l'introduction dosée du produit de réduction se présentant sous forme de particules fines selon l'une ou plusieurs des revendications 1 à 7, ainsi qu'une conduite (16, 17) amenant respectivement du carbone et de l'oxygène, une conduite de transport de gaz de réduction (12) partant du gazéificateur de fusion (10) et débouchant dans le réacteur à lit fluidisé (3) disposé le dernier dans le sens d'écoulement du minerai.

9. Installation selon la revendication 8, caractérisée en ce que les conduites de gaz (33) destinées à l'amenée du gaz de fluidisation partent d'une conduite de transport de gaz de réduction (12).

10. Procédé de fonctionnement d'un dispositif selon l'une ou plusieurs des revendications 1 à 7, caractérisé en ce que les sas à lit fluidisé (35) disposés à côté du tube central (31) sont activés en alternance.

11. Procédé selon la revendication 10, caractérisé en ce que l'activation des sas à lit fluidisé (35) s'effectue sur la base de valeurs de mesure de processus venant d'un processus se produisant dans le récipient de réacteur (10), à l'aide desquelles la position d'un point d'alimentation ou la zone d'alimentation de matériau se présentant sous forme de particules fines est déterminée dans le récipient de réacteur (10), suite à quoi une répartition du matériau se présentant sous forme de fines particules est effectuée, par un débranchement et un branchement, opérés à dessein, des sas à lit fluidisé (35).
